# EUROPÄISCHE PATENTSCHRIFT

(11) **EP 1 068 989 B1**
(45) Veröffentlichungstag und Bekanntmachung des Hinweises auf die Patenterteilung: **16.04.2003**
(21) Anmeldenummer: 00112448.6
(22) Anmeldetag: 10.06.2000
(51) Int. Cl.: B60N 2/48

(54) **Rückenlehne mit einer Kopfstütze für einen Fahrzeugsitz**
Backrest with headrest for vehicle seat
Dossier à appui-tête pour siège de véhicule

(30) Priorität: 16.07.1999 DE 19933430
(43) Veröffentlichungstag der Anmeldung: 17.01.2001
(73) Patentinhaber: DaimlerChrysler AG, 70567 Stuttgart (DE)
(72) Erfinder: Ebbeskotte, Ulrich, 75382 Althengstett (DE); Kienzle, Armin, 72108 Rottenburg (DE); Wobst, Christian, 72160 Horb (DE)

(56) Entgegenhaltungen:
- DE-A- 3 545 142
- DE-C- 4 030 949
- DE-C- 4 220 222
- DE-C- 19 705 867

## Beschreibung

Die Erfindung betrifft eine Rückenlehne für einen Fahrzeugsitz, insbesondere Fondsitz, gemäß dem Oberbegriff des Patentanspruchs 1.

Bei einer bekannten Rückenlehne dieser Art (DE 42 20 222 C1) verlaufen zwei das Kopfpolster aufnehmende Tragstangen außerhalb des Kopfpolsters im wesentlichen in einem von der Rückenlehne weggewölbten Halbkreis, der zur Wellenachse einer quer innerhalb der Rückenlehne aufgenommenen gekröpften Schwenkachse konzentrisch ist, Mit ihrem von der Kopfstütze abgewandten Ende sind die Tragstangen am gekröpften Abschnitt der Welle angeformt. Zum Ermöglichen der Schwenkbewegung der Kopfstütze sind in der Lehnenoberseite zwei parallele, schlitzartige Aussparungen vorgesehen, durch die jeweils eine Tragstange hindurchtritt. Beim Schwenken der Kopfstütze bewegen sich die Tragstangen entlang der Aussparungen. Eine oberbegriffsmäßige Rüchenlehne ist aus der DE-C-4030949 bekannt.

Öffnungen an der Oberseite der Rückenlehne stören den optischen Gesamteindruck. Außerdem können kleinere Gegenstände, die z.B. auf der Hutablage abgelegt sind, leicht in diese Öffnungen hineinfallen und den Schwenkmechanismus behindern bis stören. Eine langfristige Ablagerung von Schmutz in dem Schwenkmechanismus durch die Öffnungen in der Lehnenoberseite hindurch läßt sich nicht vermeiden.

Der Erfindung liegt die Aufgabe zugrunde, bei einer Rückenlehne der eingangs genannten Art die Kopfstütze derart zu verbessern, daß oberseitige Öffnungen in der Rückenlehne vermieden werden.

Die Aufgabe ist erfindungsgemäß durch die Merkmale des Patentanspruchs 1 gelöst.

Die erfindungsgemäße Rückenlehne hat den Vorteil, daß die notwendigen Schlitze für die Kopfstützenschwenkung auf die Rückseite der Rückenlehne verlagert sind, somit durch die Geschlossenheit der Rückenlehne im oberen Lehnenbereich ein optisch verbesserter Gesamteindruck erzielt wird. Da die Rückenlehne in der Regel nach hinten geneigt ist, die Schlitze also leicht schrägt zur Vertikalen verlaufen, ist die Verschmutzungsgefahr wesentlich reduziert. Ebenso wenig können Gegenstände ungewollt in die Aussparungen eindringen.

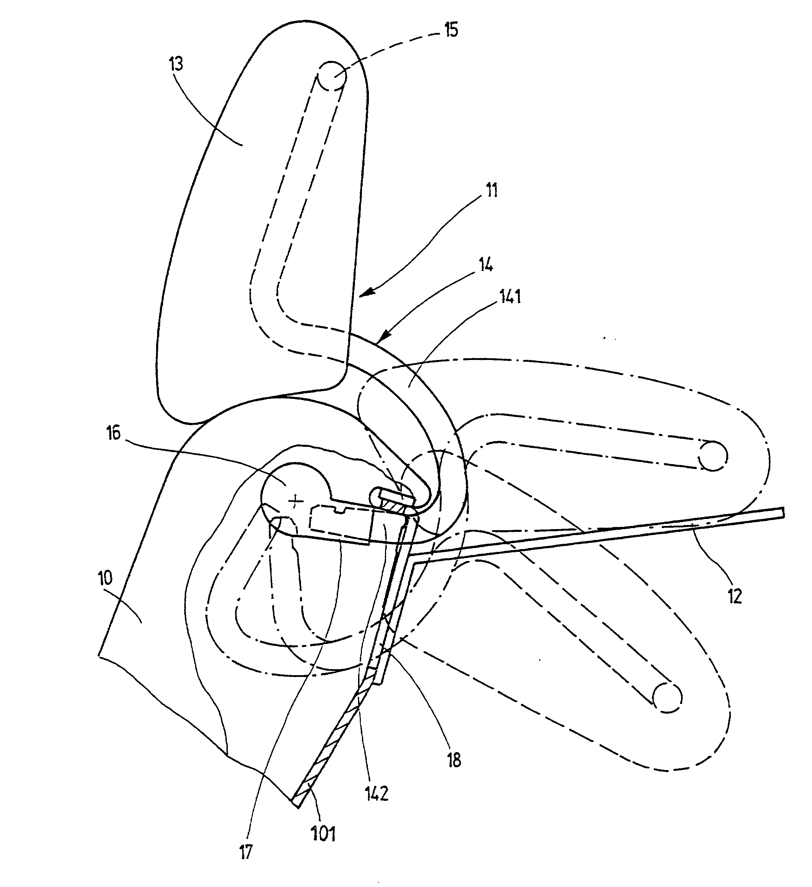

Die Erfindung ist anhand eines in der Zeichnung dargestellten Ausführungsbeispiels im folgenden näher beschrieben. Dabei zeigt die Zeichnung ausschnittweise eine Seitenansicht einer Rückenlehne mit abklappbarer Kopfstütze, teilweise geschnitten.

Die in der Zeichnung in Seitenansicht und teilweise geschnitten, ausschnittweise dargestellte Rückenlehne für einen Fondsitz eines Personenkraftwagens als Ausführungsbeispiel für einen allgemeinen Fahrzeugsitz ist mit einer Kopfstütze 11 versehen, die aus einer annähernd vertikalen Gebrauchslage in eine annähernd horizontale Nichtgebrauchslage zur Rückseite der Rückenlehne 10 hin abschwenkbar ist. Die vertikale Gebrauchslage ist in der Zeichnung ausgezogen dargestellt, die annähernd vertikale Nichtgebrauchslage strichpunktiert. Bei der Ausbildung der Rückenlehne 10 als Fondlehne liegt die Kopfstütze 11 in der Nichtgebrauchslage auf einer Abdeckplatte 12, die einen hinter der Rückenlehne 10 vorhandenen Gepäckraum abdeckt, auf, z.B. in einer Vertiefung dieser. Ist die Rückenlehne 10 in bekannter Weise klappbar nach vorn ausgebildet, um das Volumen des Gepäckraums zu vergrößern, so weist die Kopfstütze noch eine weitere Abschwenkstellung auf, wie sie in der Zeichnung strichliniert dargestellt ist. Diese Abschwenkstellung kann die Kopfstütze 11 erst einnehmen, wenn die Rückenlehne 10 nach vorn geklappt wird und dadurch die Kopfstütze 11 aus dem Bereich der Abdeckplatte 12 austritt.

Die Kopfstütze 11 weist ein Kopfpolster 13 und mindestens eine das Kopfpolster 13 aufnehmende Tragstange 14 auf. Vorzugsweise werden zwei parallele Tragstangen 14, die im Querabstand voneinander angeordnet und durch einen Quersteg 15 zu einem einstückigen Bügel zusammengefaßt sind, verwendet. Die Tragstange 14 ist an einer Schwenkwelle 16 festgelegt, die im Innern der Rückenlehne 10 drehbar gehalten ist. Die Tragstange 14 tritt dabei mit einem zur Schwenkwelle 16 konzentrisch verlaufenden, gewölbten Stangenabschnitt 141 zur Rückseite der Rückenlehne 10 hin aus dem Kopfpolster 13 aus und erstreckt sich mit einem am Ende des gewölbten Stangenabschnitts 141 abgewinkelten, gestreckten Stangenabschnitt 142 bis zur Schwenkwelle 16. Dabei verläuft der gestreckte Stangenabschnitt annähernd radial zur Schwenkwelle 16 und ist, wie in der Zeichnung schematisch dargestellt ist, in einen mit der Schwenkwelle 16 fest verbundenen Halter 17 formschlüssig eingesteckt und in diesem Halter 17 verrastet. Für den Durchtritt der Tragstange 14 zur Schwenkwelle 16 hin ist in der Rückwand 101 der Rückenlehne 10 eine schlitzförmige Aussparung 18 vorgesehen, in der sich die Tragstange 14 beim Schwenken der Kopfstütze 11 entlangbewegt. Die Länge der Aussparung 18 ist so bemessen, daß die Kopfstütze 11 nach Abklappen der Rückenlehne 10 weg von der Abdeckplatte 12 ihre untere, in der Zeichnung strichliniert dargestellte Abschwenkstellung einnehmen kann, in der sie mit der Unterseite des Kopfpolsters 13 an der Rückwand 101 der Rückenlehne 10 anliegt.

## Patentansprüche

1. Rückenlehne für einen Fahrzeugsitz, insbesondere Fondsitz, mit einer aus einer annähernd vertikalen Gebrauchslage in eine annähernd horizontale Nichtgebrauchslage an der Rückseite der Rückenlehne abschwenkbare Kopfstütze (11), die ein Kopfpolster (13) und mindestens eine das Kopfpolster (13) aufnehmende Tragstange (14) aufweist, die durch eine schlitzartige Aussparung (18) in der Rückenlehne (10) hindurchtritt und an einer in der Rückenlehne (10) angeordnete Schwenkwelle (16) festgelegt ist, wobei
die schlitzartige Aussparung (18), in der die Tragstange (14) bei der Schwenkbewegung der Kopfstütze (11) entlangbewegt wird, in der Rückwand (101) der Rückenlehne (10) angeordnet ist,
**dadurch gekennzeichnet**
**daß** die Tragstange (14) mit einem zur Schwenkwelle (16) konzentrisch verlaufenden, gewölbten Stangenabschnitt (141) zur Rückseite der Rückenlehne (10) hin aus dem Kopfpolster (13) austritt und mit einem am Ende des gewölbten Stangenabschnitts (141) abgewinkelten, gestreckten Stangenabschnitt (142) sich bis zur Schwenkwelle (16) erstreckt.

2. Rückenlehne nach Anspruch 1,
**dadurch gekennzeichnet,**
**daß** die mindestens eine Tragstange (14) mit dem freien Ende ihres gestreckten Stangenabschnitts (142) in einen Halter (17) formschlüssig einsteck- und verrastbar ist und daß der Halter (17) starr mit der drehbar in der Rückenlehne (10) gehaltenen Schwenkwelle (16) verbunden ist.

3. Rückenlehne nach Anspruch 1 oder 2,
**dadurch gekennzeichnet,**
**daß** zwei Tragstangen (14) vorgesehen sind, die im Querabstand voneinander angeordnet und mit einem im Kopfpolster (13) verlaufenden Quersteg (15) zu einem einstückigen Bügel zusammengefaßt sind.

4. Rückenlehne nach einem der Ansprüche 1 - 3,
**dadurch gekennzeichnet,**
**daß** die Kopfstütze (11) in ihrer Nichtgebrauchslage auf einer hinter der Rückenlehne (10) angeordneten Abdeckplatte (12) für einen Gepäckraum aufliegt.

5. Rückenlehne nach einem der Ansprüche 1 - 4,
**dadurch gekennzeichnet,**
**daß** die Kopfstütze (11) eine weitere Abschwenkstellung aufweist, in der sie bei nach vorn klappbar ausgebildeter Rückenlehne (10) über ihre Nichtgebrauchslage hinaus verschwenkt ist und mit der Unterseite ihres Kopfpolsters (13) an der Rückwand (101) der Rückenlehne (10) anliegt.

## Claims

1. Backrest for a vehicle seat, particularly a rear seat, with a headrest (11) that can swing away from an approximately vertical position of use into an approximately horizontal, un-used position on the back of the backrest, that has head padding (13) and at least one support bar (14) that holds the head padding (13), the said support rod passing through a slot-like opening (18) in the backrest (10) and being attached onto a pivoting shaft (16) disposed in the backrest (10), whereby the slot-like opening (1), in and along which the support bar (14) is moved, is disposed in the rear surface (101) of the backrest (10),
**characterized in that** the support bar (14) comes out, towards the back of the backrest (10), of the head padding (13), with an arched bar section (141) that runs concentrically in relation to the pivoting shaft (16), and extends as far as the pivoting shaft (16) with an angled-off, elongated bar section (142).

2. Backrest in accordance with claim 1,
**characterized in that** the at least one support bar (14) can, with the free end of its extended bar section (142), be inserted and locked, flush-fitting, into a holding means (17), and **in that** the holding means (17) is rigidly connected to the pivoting shaft (16) held such that it can rotate in the backrest (10).

3. Backrest in accordance with claim 1 or 2,
**characterized in that**
two support bars (14) are provided that are disposed separated from each other transversely and are combined with a crosspiece (15) in the head-padding (13) to form a single-piece holder.

4. Backrest in accordance with one of claims 1 to 3,
**characterized in that**
the headrest (11) lies, in its un-used position, on a cover plate (12), for a luggage space, disposed behind the backrest (10).

5. Backrest in accordance with one of claims 1 to 4,
**characterized in that**
the headrest (11) has a further swung-back position in which, with a backrest (10) that is developed such that it can be folded forwards, it is swivelled beyond its position of being not in use and lies, with the underside of its head padding (13), on the rear face (101) of the backrest (10).

## Revendications

1. Dossier pour siège de véhicule, notamment pour siège arrière, équipé d'un appui-tête (11) pivotant depuis une position d'utilisation approximativement verticale vers une position de non utilisation approximativement horizontale sur le côté arrière du dossier, l'appui-tête comportant un rembourrage de tête (13) et au moins une tige porteuse (14) fixant le rembourrage de tête (13) et passant à travers une réservation (18) en forme de fente prévue dans le dossier (10) et fixée à un arbre pivot (16) disposé dans le dossier (10), cette réservation en forme de fente (18) le long de laquelle la tige porteuse (14) se déplace lors du pivotement de l'appui-tête (11) étant disposée dans la paroi arrière (101) du dossier (10), **caractérisé en ce que** la tige porteuse (14) sort du rembourrage de tête (13) par un tronçon de tige (141) cintré et d'allure concentrique par rapport à l'arbre pivot (16) vers l'arrière du dossier de siège (10) et s'étend jusqu'à l'arbre pivot (16) par un tronçon de tige (142) coudé et aplati à l'extrémité du tronçonn de tige (141) cintré.

2. Dossier selon la revendication 1, **caractérisé en ce que** l'au moins une tige porteuse (14) est emboîtable et encliquetable dans un support (17) par l'extrémité libre de son tronçon de tige étiré (142) et que le support (17) est relié de manière rigide à l'arbre pivot (16) maintenu en position de façon rotative dans le dossier (10).

3. Dossier selon la revendication 1 ou 2, **caractérisé en ce que** deux tiges porteuses (14) sont prévues, disposées à distance transversale l'une par rapport à l'autre et réunies par une entretoise (15) installée dans le rembourrage de tête (13) pour former un étrier d'une pièce.

4. Dossier selon l'une des revendications 1 à 3, **caractérisé en ce que** l'appui-tête (11) dans sa position de non utilisation repose sur un recouvrement (12) de compartiment à bagages disposé derrière le dossier (10).

5. Dossier selon l'une des revendications 1 à 4, **caractérisé en ce que** l'appui-tête (11) dispose d'une position supplémentaire de pivotement dans laquelle, dans le cas d'un dossier (10) réalisé rabattable vers l'avant, il est pivoté au-delà de sa position de non utilisation et repose par le côté inférieur du rembourrage de tête (13) contre la paroi arrière (101) du dossier (10).
